# EUROPEAN PATENT SPECIFICATION

(11) **EP 3 110 022 B1**
(45) Date of publication and mention of the grant of the patent: **06.03.2019**
(21) Application number: 14883234.8
(22) Date of filing: 27.05.2014
(51) Int. Cl.: G06F 3/0488, G06F 1/32

(54) **MOBILE TERMINAL AND METHOD FOR CONTROLLING SAME**
MOBILES ENDGERÄT UND VERFAHREN ZUR STEUERUNG DAVON
TERMINAL MOBILE ET SON PROCÉDÉ DE COMMANDE

(30) Priority: 19.02.2014 KR 20140019255
(43) Date of publication of application: 28.12.2016
(73) Proprietor: LG Electronics Inc., Seoul 07336 (KR)
(72) Inventor: LEE, Seojin, Seoul 06772 (KR); CHOI, Jinhae, Seoul 06772 (KR); PARK, Hyekyung, Seoul 06772 (KR); CHI, Jumin, Seoul 06772 (KR)
(74) Representative: Beyer, Andreas
(86) International application number: PCT/KR2014/004713
(87) International publication number: WO 2015/126012

(56) References cited:
- KR-A- 20090 124 089
- KR-A- 20110 090 165
- KR-A- 20120 033 515
- KR-A- 20130 076 482
- US-A1- 2010 299 638
- US-A1- 2011 283 241
- US-A1- 2013 069 897
- US-A1- 2013 187 863
- US-A1- 2013 222 323
- Craig Villamor ET AL: "Touch Gesture REFERENCE GUIDE", , 15 April 2010 (2010-04-15), XP055024104, Retrieved from the Internet: URL:http://web.archive.org/web/20100601214 053/http://www.lukew.com/touch/TouchGestur eGuide.pdf [retrieved on 2012-04-10]

## Description

### BACKGROUND OF THE INVENTION

### 1. Field of the Invention

The present invention relates to a mobile terminal and a method of controlling the mobile terminal.

### 2. Background of the Invention

In recent years, mobile terminals have been realized in the form of multimedia apparatus, each equipped with various functions such as photographing, video shooting, video reproducing, Internet surfing, a SMS function, and a social network service (SNS) function.

With technological development, the mobile terminals can provide more functions and services. For example, in the mobile terminal, an SNS message, an SMS message, unchecked alarm information, time information and the like can be displayed on a locked screen. Thus, the user can check the time information or information relating to various unchecked events only by turning on a display unit.

US 2013/0187863 A1 discloses a method for progressively illuminating a display of a portable electronic device in response to a pre-determined gesture.

US 2013/0069897 A1 discloses a method for switching an operational state of a display unit or a processing unit of an electronic device in response to a touch input having a pre-determined input trace.

### SUMMARY OF THE INVENTION

The invention is defined by the independent claims. Further aspects of the invention are outlined in the dependent claims. Embodiments relate only to claimed combinations of features. In the following, when the term "embodiment" relates to unclaimed combinations of features, said term has to be understood as referring to examples of the present invention.

Therefore, an aspect of the detailed description is to provide a mobile terminal and corresponding method enabling a user to check various pieces of information including a screen associated with a predetermined operational state, such as a locked screen, in an easy, fast manner.

Another aspect of the detail description is to provide a mobile terminal and corresponding method for enabling a user to check pieces of screen information included in a screen associated with a predetermined operational state for a predetermine time without performing a process of turning on or off a display unit.

To achieve these and other advantages and in accordance with the purpose of this specification, as embodied and broadly described herein, there is provided a mobile terminal according to claim 1. The present invention also provides a corresponding method of controlling the mobile terminal.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the appended claims will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
FIG. 1A is a diagram illustrating a mobile terminal according to an embodiment of the present invention;
FIGS. 1B and 1C are diagrams illustrating an example of the mobile terminal according to an embodiment of the present invention when viewed from different directions;
FIG .2 is a flowchart illustrating a method of controlling the mobile terminal according to an embodiment of the present invention;
FIG. 3 is a flowchart illustrating a process of partitioning a display unit into multiple regions based on a tapping tool staying in contact with a display unit;
FIG. 4 is a flowchart illustrating a process of displaying screen information corresponding to when a drag input is applied, which is one step described above referring to FIG. 2;
FIG. 5 is a flowchart illustrating another process of displaying the screen information corresponding to when the drag input is applied, which is one step described above referring to FIG. 2;
FIGS. 6(a) to 6(d) are diagrams illustrating an example in which according to the steps described referring to FIG. 2, the screen information is displayed based on the tapping tool staying in contact with the display unit;
FIGS. 7A(a) to 7A(d), 7B(a) to 7B(d), 7C(a) to 7C(c), and 7D(a) to 7D(c) are diagrams illustrating an example in which the screen information corresponding to the drag input being displayed according to the steps described referring to FIG. 4; and
FIGS. 8A(a) and 8A(b), 8B(a) and 8B(b), 8C(a) and 8C(b), and 8D(a) and 8D(b), 8E(a) to 8E(d) illustrates another example in which the screen information is displayed based on the drag input in the mobile terminal according to the embodiment of the present invention.

### DETAILED DESCRIPTION OF THE INVENTION

Description will now be given in detail according to embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

The accompanying drawings are used to help easily understand various technical features and it should be understood that the embodiments presented herein are not limited by the accompanying drawings. As such, the present invention should be construed to extend to any alterations, equivalents and substitutes in addition to those which are particularly set out in the accompanying drawings.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC, an ultra book, a wearable device (e.g., smart watch), a glass-type terminal (e.g., smart glass), a head mounted display (HMD), etc. However, the present invention may be also applicable to a fixed terminal such as a digital TV, a desktop computer and a digital signage, except for specific configurations for mobility.

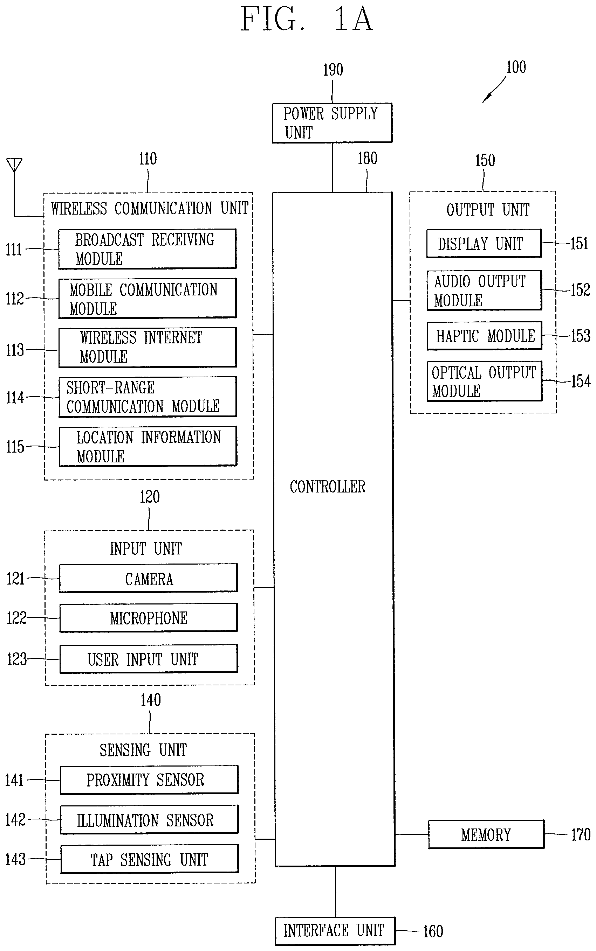

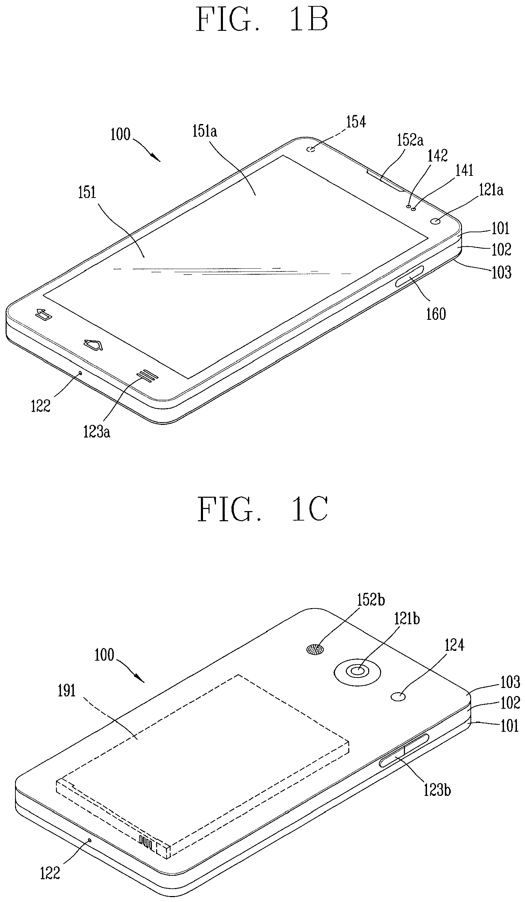

Reference is now made to FIGS. 1A-1C, where FIG. 1A is a block diagram of a mobile terminal according to an embodiment of the present invention, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components of FIG. 1A is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in FIG. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, GSM, CDMA, WCDMA, LTE and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the mobile terminal. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Further, the sensing unit 140 of the mobile terminal 100 according to an embodiment of the present invention further includes a tap sensing unit 143 that detects tap or a tap gesture that the user applies to a main body of the mobile terminal 100. In addition, the tap sensing unit 143 detects a gesture applied to the main body of the mobile terminal 100 or on object. More specifically, the tap is construed to mean an operation of hitting a tapping tool such as a finger lightly on the main body of the mobile terminal 100, or the object, or an operation of causing the tapping tool to come into contact lightly with the main body of the mobile terminal 100 or the object.

Further, the tapping tool is a thing with which an external force is applied to the main body of the mobile terminal 100, and the object, for example, such as a stylus pen, a pen, a point, or a fist. Also, the tapping tool is not limited to the thing which a touch input is applied to the mobile terminal 100. Rather, according to an embodiment of the present invention, any type of thing with which the external force can be applied to the main body of the mobile terminal 100 or the object can be used as the tapping tool.

Further, the object to which the tap gesture is applied is at least one among the main body of the mobile terminal 100 and an object on which the mobile terminal 100 is placed.

In addition, according to an embodiment of the present invention, the tap or the tap gesture is detected by at least one among an acceleration sensor and the touch sensor that are included in the tap sensing unit 143. Further, the acceleration sensor is a sensor capable of measuring dynamic forces, such as acceleration, vibration, and impact, which are applied to the main body of the mobile terminal 100.

That is, the acceleration sensor detects whether or not the tap is applied to the object, by detecting a movement (vibration) of the main body of the mobile terminal 100 that occurs due to the tap gesture. Therefore, the acceleration sensor detects the tap on the main body of the mobile terminal 100 or detects the tap on an object that is positioned so close to the main body of the mobile terminal 100 that the movement or the vibration of the main body of the mobile terminal 100 can be detected.

Thus, as long as the acceleration sensor can detect the movement of the vibration of the main body of the mobile terminal 100, the acceleration sensor can detect the tap applied not only to the main body of the mobile terminal 100, but also to an area other than the main body of the mobile terminal 100.

In order to detect the tap on the main body of the mobile terminal 100, only one among the acceleration sensor and the touch sensor is used, the acceleration sensor and the touch sensor are sequentially used, or the acceleration sensor and the touch sensor are used at the same time. Further, a mode in which only the acceleration sensor is used to detect the tap is referred to as a first mode, a mode in which the touch sensor is used to detect the tap is referred to as a second mode, and a mode in which the acceleration sensor and the touch sensor are all utilized (at the same time or sequentially) to sense the tap is referred to as a third mode or a hybrid mode.

Further, when the tap is detected, it is possible to more accurately recognize a position in which the tap is detected. In addition, in order to detect the tap through the acceleration sensor or the touch sensor, the display unit 151 operates in a specific mode in which a minimum amount of current or electric power is consumed, even in an inactivated state. Such a specific mode is referred to as a "doze mode."

For example, a light-emitting element for outputting a screen to the display unit 151 is turned off and the touch sensor for detecting the tap on the display unit 151 is turned on in the doze mode, and in the mobile terminal 100 that has a touch screen structure in which the touch sensor is combined into the display unit 151 in a layered manner. In addition, the doze mode may be a mode in which the display unit 151 is turned off and the acceleration sensor is turned on. In addition, the doze mode may be a mode in which the display unit 151 is turned off and the touch sensor and the acceleration sensor are all turned on.

Therefore, in the doze mode, that is, when the lighting for the display unit 151 is turned off (when the display unit 151 is inactivated), and when the user applies the tap to at least one point on the display unit 151 or applies the tap to a specific point on the main body of the mobile terminal 100, at least one among the touch sensor or the acceleration senor detects that the user applies the tap.

In addition, only when at least two taps or more in secession are applied within a reference time, the tap sensing unit 143 determines that "tap" for controlling the mobile terminal 100 is detected. For example, when the tapping tool is applied one time to the display unit 151, the tap sensing unit 143 recognizes the one-time tap as the touch input. That is, the controller 180 controls a function (for example, a function of selecting an icon that is output to a point to which the touch input is applied) according to the touch input corresponding to the one-time tap.

Therefore, the controller 180 determines that "tap" for controlling at least one function or more is detected only when the tap sensing unit 143 detects that at least two taps or more (or multiple taps) in succession are applied within the reference time. That is, the detecting of the tap means that at least two tap gestures or more in succession are detected within the reference time. Therefore, the detecting of the "tap" hereinafter means that the multiple taps are applied to the main body of the mobile terminal 100 with an object such as a user's finger or a touch pen .

Furthermore, the controller 180 can determine not only whether the taps are detected within the reference time, but also whether the taps are applied with different fingers or the taps that are applied with one finger. For example, when the taps are detected as being applied to the display unit 151, the controller 180 determines whether the taps are applied with one finger or with different fingers, by recognizing fingerprints on a portion of the display unit 151 to which the taps are applied. In addition, the controller 180 recognizes a position on the display unit 151, in which the taps are detected, or an acceleration generated due to the taps, through at least one of the touch sensor and the acceleration sensor provided in the tap sensing unit 143. Thus, the controller 410 determines whether the taps are applied with one finger or with different fingers.

Furthermore, the controller 180 also considers an angle at which the tap is applied and a distance between points to which the tap is applied or a direction in which the fingerprint is recognized, in order to determine whether the taps are applied with one finger, both hands or at least two fingers. Further, the detecting of the tap means that the multiple taps in succession are detected within the reference time. In addition, the reference time is a very short time, for example, a time in a range of 300 ms to 2s.

Accordingly, when the tap sensing unit 143 detects that the tap is applied to the main body of the mobile terminal 100 for the first time, the tap sensing unit 143 detects whether the tap is applied for a second time within the reference time after the tap is applied for the first time. Then, when the tap is detected within the reference time, the tap sensing unit 143 or the controller 180 determines that a tap is detected for controlling a specific function of the mobile terminal according to an embodiment of the present invention. Thus, in one embodiment, only when a second tap is detected a within a predetermined time after a first tap is detected, the controller 180 recognizes the first and second taps as "effective taps." Therefore, the controller 180 determines whether the user applies the tap in order to control the mobile terminal 100 or applies the tap by mistake.

In addition, there are various methods by which the controller 180 can recognize the taps as "effective taps." For example, when the second tap in a second reference number or greater are detected as being applied to the main body of the mobile terminal 100 within a predetermined time after the first tap in a first reference number or greater are detected as being applied, the controller 180 can recognize the first and second taps as the "effective taps." Also, the first reference number and the second reference number may be different from each other. For example, the first reference number may be 1, and the second reference number may be 2. As another example, the first reference number and the second reference number may be all 1.

In addition, in one embodiment, the controller 180 can determine that the "taps" are detected only when the tap is applied to within a "predetermined region." That is, when the tap is detected as being applied to the main body of the mobile terminal 100 for the first time, the controller 180 calculates a predetermined region from a point at which the tap is detected for the first time. Then, when the taps in the first reference number or greater, or the taps the second reference number or greater are detected as being applied to the "predetermined region" within the reference time after the tap is detected for the first time, the controller 180 determines that the first tap or the second tap is applied.

Further, the reference time and the predetermined region may be changed in various ways according to the embodiment. In addition, the first tap and the second tap can be recognized as taps that are independent of each other, according to a position in which each of the first and second taps is detected, as well as the reference time and the predetermined region. That is, when the second tap is detected in a position located a predetermined distance or above away from the position in which the first tap is detected, the controller 180 determines that the first tap and the second tap are applied. Then, based on the position detected in the manner, the first and the second tap are recognized, and the first tap and the second tap may be detected at the same time.

In addition, when the first tap and the second tap each is made up of multiple touches, that is, the multiple-time tapping, the multiple touches that make up each of the first tap and the second tap, can be detected at the same time. For example, when an initial touch that makes up the first tap is detected and at the same time an initial touch that makes up the second tap is detected in a position that is located a predetermined distance or above away from the position in which the first t tap is detected, the controller 180 determines that the initial touch that makes up each of the first tap and the second tap is detected. Then, the controller 180 determines that an additional touch input is detected as being applied to each position. When the touches in the first reference number or the second reference number are detected in each position, the controller 180 determines that the first tap and the second tap are applied.

Further, when the tap sensing unit 143 detects that the multiple taps are applied to the main body of the mobile terminal 100, the controller 180 control at least one among functions that can be executed on the mobile terminal 100, based on the detected multiple taps. For example, when the multiple taps satisfy a predetermined condition, the controller 180 controls at least one function that can be executed on the mobile terminal 100. As one example, the controller 180 can control different functions, depending on whether the user applies the multiple taps with only his/her one finger or hand, or with at least his/her two fingers or both hands. In addition, at least one function that can be executed on the mobile terminal 100 may be controlled based on the multiple taps in a current operational state of the mobile terminal 100 and in a current environment of the mobile terminal 100.

In addition, the functions that can be executed on the mobile terminal 100 mean all types of functions that can be executed or run on the mobile terminal 100. For example, one of the functions can be an application installed in the mobile terminal 100. For example, an expression "executing an arbitrary function" means that an arbitrary application is executed or run on the mobile terminal 100.

As another example, the function that can be executed on the mobile terminal 100 may be a function used for basic driving of the mobile terminal 100. For example, the basic function includes turning on and off the lighting for the display unit 151, switching the mobile terminal 100 from an unlocked state to a locked state or from the locked state to the unlocked state, setting a communication network, changing setting information on the mobile terminal 100, and the like.

Further, when the display unit 151 is inactivated, and based on the user's selection, the display unit 151 activates at least one region of the display unit 151 and guides the user with checking desired screen information using at least one activated region. In addition, the controller 180 can display the screen information on the one region of the display unit 151 only for a given time without the need for the user to directly turn off the display unit 151. In addition, in one embodiment, the controller 180 turns on only light emitted diodes (LED) corresponding to at least one region of the display unit 151, which is selected by the user and displays the screen information on the lighted region, thereby indicating that the region is activated.

For example, the tapping tool applied to the main body of the mobile terminal 100 determines whether or not the user selects the activation of only one region of the display unit 151. That is, when multiple taps are applied to the main body of the mobile terminal, the controller 180 enters into a predetermined operational state (for example, an operational state in which a locked screen or a home screen is displayed, or an operational state where a specific application is executed). However, when the tapping tool stays in contact, as described above, the controller 180 determines that the user selects the activation of only one region of the display unit 151.

In this instance, based on the tapping tool staying in contact, the controller 180 partitions the display unit 151 into multiple regions. For example, the controller 180 partitions the display unit 151 into a first region formed based on the tapping tool staying in contact, and a second region that includes regions other than the first region. Then, the controller 180 can activate only the first region in order for the screen information to be displayed on the first region.

In addition, the pieces of screen information to be displayed on the first region are various. As one example, when the display unit 151 switches from the inactivated state to the activated state, the screen information to be displayed on the first region is determined according to which screen information is displayed on the display unit 151. For example, when the display unit 151 switches from the inactivated state to the activated state and the locked screen is displayed, the controller 180 displays on the first region at least one portion of the screen information displayed on the locked screen.

That is, when the display unit 151 switches from the inactivated state to the activated state, and when the screen information corresponding to a predetermined operational state is displayed, the screen information to be displayed on the first region is at least one portion of the screen information corresponding to the predetermined operational state. More specifically, the screen information to be displayed on the first region may be a portion of screen information corresponding to the predetermined operational state, which is displayed on a display region that corresponds to a size or position of the first region.

Therefore, when the predetermined operational state is an operational state in which the locked screen is displayed, at least one portion of the screen information displayed on the locked screen is displayed on the first region. In addition, when the predetermined operational state is an operational state in which a predetermined home screen is displayed or a specific application is executed, at least one portion of the screen information corresponding to the operational state in which the home screen is displayed or the specific application is executed, more specifically, screen information on the display region that corresponds to the first region, is displayed on the first region.

Further, based on the user's selection, the controller 180 can change the position of the first region. For example, when the tapping tool with which the last tap is applied stays in contact with a position to which the last tap is applied and then a drag input is applied from the user, the controller 180 can change the first region based on the applied drag input.

Then, when the position of the first region is changed, the screen information displayed on the first region is changed as well. This is because when the display unit 151 switches from the inactivated state to the activated state, one portion corresponding to the position of the first region, of the screen information corresponding to a predetermined operational state displayed on the display unit 151, is changed as the position of the first region is changed. Accordingly, when the position of the first region is changed, one portion of the screen information corresponding to the predetermined operational state, which corresponds to the changed position of the first region and the size of the first region, is displayed on the first region. Accordingly, while freely moving the first region, the user can search the screen information corresponding to the predetermined operational state| for his/her desired information.

In addition, when the position of the first region is changed, as described above, the first region may maintain the activated state (the state where the screen information is displayed) only for a predetermined time. For example, when the drag input is applied when the tapping tool stays in contact, the controller 180 can activate the first region only while the tapping tool stays in contact. That is, when the drag input is applied with the tapping tool staying in contact, the controller 180 maintains the activated state of the first region only while the tapping tool with which the user applies the tap for the touch input stays in contact, in order to apply the drag input.

Therefore, when the tapping tool no longer stays in contact, that is, when the tapping tool with which the tap for the drag input is applied is located a predetermined distance away from or above the main body of the mobile terminal 100, the controller 180 determines that the touch input is terminated, switches the first region from the activated state to the inactivated state, and cancels the current setting states of the first region and the second region.

In addition, the screen information to be displayed on the first region may be determined based on the drag input applied in the state where the tapping tool with which the tap is applied stays in contact. For example, when a drag trace of the drag input is matched to a predetermined specific pattern, the controller 180 can display screen information associated with an application corresponding to the pattern to which the drag trace of the drag input is matched, on the first region. Furthermore, the application corresponding to the specific pattern may vary with a direction in which the drag input that forms the specific pattern is applied.

That is, for example, when the application corresponding to the rectangular pattern is an application for displaying an unchecked message or an application for displaying a schedule for a specific date, when the drag trace of the drag input is in the rectangular pattern, screen information associated with either the application for displaying the unchecked message or the application for displaying the schedule for the specific date is displayed on the first region based on the direction in which the drag input that is input to form the rectangular pattern is applied.

In addition, information relating to at least one specific pattern and at least one application corresponding to the specific pattern are stored in a memory 170. Then, piece of information on directions in which different drag inputs corresponding to multiple applications, respectively, are applied are additionally stored in the memory 170.

Further, the size of the first region may be determined in various ways. For example, the controller 180 determines the size of the first region, based on the amount of pressure that the tapping tool applies to the main body of the mobile terminal 100 or on a period of time for which the tapping tool with which the tap is applied stays in contact. That is, the tap sensing unit 143 may include at least one among a pressure sensing unit for measuring the amount of pressure that the tapping tool applies to the main body of the mobile terminal 100 and a measuring unit for measuring the period of time for which the tapping tool with which the tap for touch input is applied stays in contact.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The display unit 151, the first audio output module 152a, the second audio output module 152b, the proximity sensor 141, the illumination sensor 142, the optical output module 154, a first camera 121a, a second camera 121b, the first manipulation unit 123a, the second manipulation unit 123b, the microphone 122, the interface 160, etc. may be provided at the mobile terminal 100.

As shown in FIGS. 1B and 1C, the display unit 151, the first audio output module 152a, the proximity sensor 141, the illumination sensor 142, the optical output module 154, the first camera 121a and the first manipulation unit 123a are arranged on a front surface of the terminal body. The second manipulation unit 123b, the microphone 122 and the interface 160 are arranged on side surfaces of the terminal body. And the second audio output module 152b and the second camera 121b are arranged on a rear surface of the terminal body.

However, alternative arrangements are possible and within the teachings of the instant invention. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable mobile terminals. Examples of such suitable mobile terminals include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two mobile terminals, which can implement the same or different display technology. For instance, a plurality of the display units 151 may be arranged on one side, either spaced apart from each other, or these devices may be integrated, or these devices may be arranged on different surfaces.

Some of these displays may be configured as transparent or light-transmissive displays through which the user can see the outside. These displays may be called as transparent displays. A representative example of the transparent displays may be a transparent OLED (TOLED), and the like. The rear structure of the display unit 151 may also be configured as a light-transmissive structure. Through such a structure, the user can see an object positioned on the rear of the body of the terminal through a region occupied by the display unit 151.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a receiver, and the second audio output module 152b may be implemented in the form of a loud speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may be implemented in a user's non-tactile manner, e.g., by a proximity touch, a hovering touch, etc.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

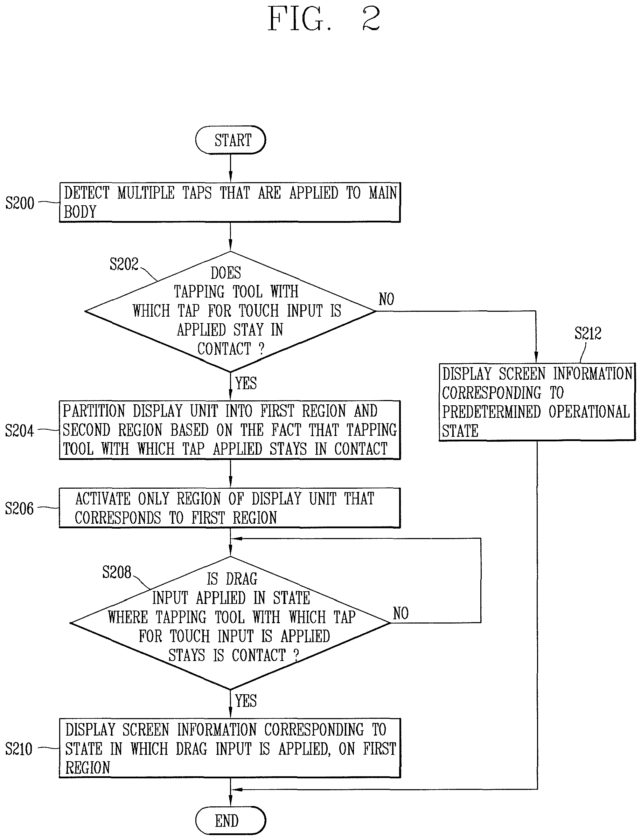

A method of controlling the mobile terminal with the configuration described above according to embodiments of the present invention is described below referring to the accompanying drawings. In particular, FIG. 2 is a flowchart illustrating a method of controlling the mobile terminal according to an embodiment of the present invention.

Referring to FIG. 2, when multiple taps are applied to the main body of the mobile terminal 100 in the inactivated state of the display unit 151, the controller 180 detects this (S200). Then, the controller 180 determines whether or not the tapping tool with which the tap is applied stays in contact with the position to which the last tap among the multiple taps is applied (S202). For example, when in Step S202, the tapping tool with which the last tap is applied stays in contact with the main body of the mobile terminal 100 for more than a given time, the controller 180 determines that the tapping tool with which the tap is applied stays in contact.

In Step S202, the controller 180 determines whether or not the tapping tool with which the last tap for the touch input is applied stays in contact, based on the period of time for which the tapping tool with which the last tap input stays in contact. Then, as a result of determining whether or not the tapping tool with which the last tap stays in contact, when it is determined that the tapping tool does not stay in contact, the controller 180 switches the display unit 151 to the activated state, and displays the screen information corresponding to a predetermined operational state on the display unit 151, based on the applied multiple taps (S212).

However, as the result of the determination in Step S202, when it is determined that the tapping tool with which the tap is applied stays in contact, the controller 180 partitions the display unit 151 into the multiple regions, based on the fact that the tapping tool with which the tap for touch input is applied stays in contact (S204). In Step S204, the controller 180 partitions the display unit 151 into the first region that is formed based on the fact that the tapping tool with the tap is applied stays in contact, and the second region that includes regions other than the first region.

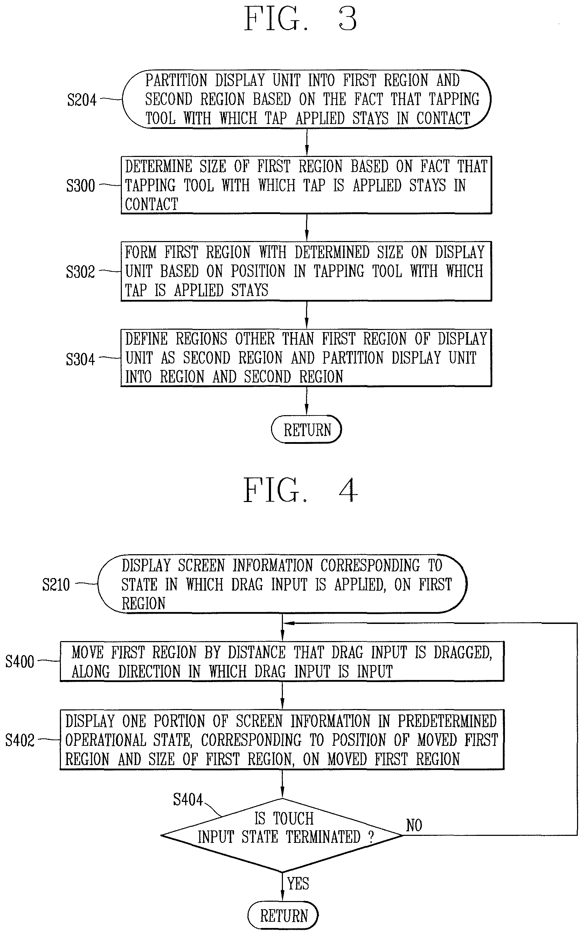

In addition, the controller 180 changes the size of the first region, based on the fact that the tapping tool stays in contact. For example, as described above, the controller 180 determines the size of the first region, based on at least one, among the amount of pressure that the tapping target with which the touch input for the touch input is applied applies to the main body of the mobile terminal 100 and the period of time for which the tapping tool with which the tap is applied stays in contact. A process of changing the size of the first region in this manner is described in more detail below referring to FIG. 3.

Further, when in Step S204, the display unit 151 is partitioned into the first region and the second region, only a region of the display unit 151, which corresponds to the first region, is activated (S206). That is, the controller 180 causes the second region of the display unit 151 to maintain the inactivated state, that is, where no screen is displayed, on the second region, and activates the region of the display unit 151, which corresponds to the first region, in order for the screen information to be displayed on the first region.

Accordingly, in Step S206, a portion displayed on the display region corresponding to the first region, of the screen information corresponding to a predetermined operational state, which is displayed on the display unit 151 when the display unit 151 switches from the inactivated state to the activated state, is displayed on the first region.

For example, when the predetermined operational state is a locked screen, in Step S206, at least one portion of the screen information displayed on the locked screen is displayed on the first region. That is, when current time information and alerting information alerting the user to unchecked event information are displayed on the locked screen, the controller 180 displays at least one portion of the screen information including the current time information and the alerting information on the first region.

Further, when the display region corresponding to the first region is activated , the controller 180 determines whether or not the drag input is applied in when the tapping tool stays in contact (S208). Then, as a result of the determination in Step S208, when the drag input is applied where the tapping tool with which the tap is applied stays in contact, the controller 180 displays on the first region the screen information corresponding to the drag input being applied (S210).

For example, in Step S210, the controller 180 changes the position of the first region based on a direction in which the drag input is applied. In this instance, when the position of the first region is changed, the controller 180 displays a portion of the screen information corresponding to the predetermined operational state corresponding to the changed position of the first region and the size of the first region that is determined in Step S204, on the changed position of the first region.

Further, in Step S210, when the drag trace of the drag input matches at least one predetermined specific pattern, the controller 180, can execute a specific application base on at least the one specific pattern to which the drag trace of the drag input is matched. In addition, there are various types of specific applications. For example, the applications may include widgets or applications relating to weather information, news, life style, schedule management, time information, and the like and applications for displaying alerting information that alerts the user to an unchecked short messaging service (SMS) message or a social network service (SNS) event. In addition, the applications may include applications for checking various documents, images, and the like.

The application is configured to be matched to a specific pattern according to the user's selection, and a pattern corresponding to each of the applications is determined according to the user's selection. Steps in which a screen information relating to a specific application is displayed on the first region according to a pattern that is matched to the drag trace of the drag input are described in more detail below referring to FIG. 3.

FIG. 3 is a flowchart illustrating in more detail a process of partitioning the display unit into multiple regions based on the tapping tool staying in contact with the display unit, which is one step of the method that is described above referring to FIG. 2. Referring to FIG. 3, when the controller 180 determines in Step S202 that the tapping tool stays in contact, the controller 180 determines the size of the first region, based on the tapping tool staying in contact (S300). In Step S300, the controller 180 determines the size of the first region, based on the amount of pressure that the tapping target with which the touch input for the touch input is applied applies to the main body of the mobile terminal 100 or the period of time for which the tapping tool with which the tap is applied stays in contact.

For example, in step S300, the controller 180 determines that the greater the amount of pressure that the tapping tool applies, the greater the size of the first region. For example, when it is determined in Step S202 that the tapping tool stays in contact, the controller 180 can measure the amount of pressure applied by the tapping tool, in order to determine the size of the first region according to a change in the amount of pressure.

In this instance, when it is determined in Step S202 that the tapping tool in contact, the controller 180 forms the first region with a predetermined size. Then, when the amount of pressure that the tapping tool applies increases, the controller 180 determines a size of the first region so the size of the first region is greater than the predetermined size. The controller 180 can determine the size of the first region so the size of the first region is smaller than the predetermined size.

In addition, based on the period of time for which the tapping tool stays in contact, the controller 180 can determine the size of the first region so the size of the first region is greater than the predetermined size. For example, based on the period of time for which the tapping tool stays in contact, the controller 180 can determine the size of the first region so the size of the first region is greater than the predetermined size. Alternatively, based on the period of time for which the tapping tool with which the tap is applied stays in contact, the controller 180 can determine that the size of the first region is smaller than the predetermined size of the first region.

When the size of the first region is determined, the controller 180 forms on the display unit 151 the first region that has the size determined in Step S300, based on the position with which the tapping tool stays in contact (S302). Then, the controller 180 defines regions other than the first region of the display unit 151 as the second region, and partitions the display unit 151 into the first region and the second region (S304). Then, when in Step S304, the display unit 151 is partitioned into the multiple regions, the controller 180 proceeds to Step S206, and displays on the first region at least one portion of the screen information corresponding to the predetermined operational state corresponding to the size and the position of the first region.

Next, FIG. 4 is a flowchart illustrating in more detail a process of displaying the screen information corresponding to the state where the drag input is applied, which is one step of the method that is described above referring to FIG. 2. Referring to FIG. 4, when in Step S208, the drag input is applied when the tapping tool stays in contact, based on the direction in which the drag input is applied, the controller 180 moves the position of the first region by a distance that the drag input is dragged (S400).

Then, the controller 180 displays on the moved first region one portion of the screen information corresponding to the predetermined operational state corresponding to the position of the moved first region and the predetermined size of the first region (S402). Therefore, when the first region is moved, the screen information displayed on the first region changes.

That is, for example, when the display unit 151 switches from the inactivated state to the activated state, and when the screen information displayed on the display unit 151 is the screen information on the locked screen, in Step S206, at least one portion of the screen information displayed on the locked screen is displayed on the first region. More specifically, when the size and the position of the first region formed based on the tapping tool being applied correspond to the display region on which the time information in the locked screen is displayed, the time information in the locked screen is displayed on the first region.

When, in this state, the user applies the drag input with the tapping tool staying in contact, the controller 180 changes the position of the first region, based on the direction in which the drag input is applied. For example, when the drag input is applied in a direction of the lower portion of the display unit 151, the controller 180 changes the position of the first region to a position corresponding to the lower portion of the display unit 151, based on the direction in which the drag input is applied and the distance that the drag input is dragged. Then, at least one portion of the screen information in the locked screen corresponding to the changed position of the first region and the predetermined size of the first region is displayed on the first region.

Therefore, when in the locked screen, the time information is displayed on the upper portion of the display unit 151, and the alerting information for displaying the unchecked message and the like is displayed on the lower portion of the display unit 151, the alerting information displayed on the lower portion of the display unit 151 may be displayed on the first region that is moved based on the drag input. In addition, the upper portion of the display unit 151 means a portion in which a speaker of the mobile terminal 100 is arranged, and the lower portion of the display unit 151 means a portion in which a microphone of the mobile terminal 100 is arranged.

Further, the controller 180, changes the position of the first region based on the direction in which the user applies the drag input (S402), checks whether or not a touch input state is terminated (S404). Then, when the touch input state is terminated, the controller 180 switches the first region from the activated state to the inactivated state, and cancels the setting states of the first region and the second region.

That is, when the drag input is applied with the tapping tool staying in contact, the controller 180 maintains the activated state of the first region only while the tapping tool with which the user applies the tap for the touch input stays in contact, in order to apply the drag input. Therefore, when the tapping tool with which the user applies the tap for the touch input no longer stays in contact, the controller 180 switches all the region of the display unit from the activated state to the inactivated state. In addition, an expression "termination of the touch input state" mean not only that the tapping tool no longer stays in contact with the main body of the mobile terminal 100, but may mean also that the tapping tool is located a predetermined distance or above away from the main body of the mobile terminal 100.

However, as a result of the checking in S404, when the touch input state is not terminated, the controller 180 performs repeatedly steps from Step S400 to Step S404. This is because when the touch input state is not terminated, the user can apply the drag input again, in which case the screen information displayed on the first region is changed based on the drag input that is again applied. Further, as described above, the screen information relating to a specific application is displayed on the first region, corresponding to the state in which the drag input is applied.

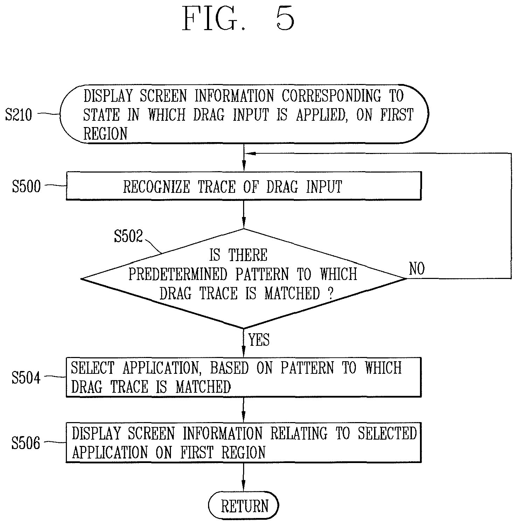

FIG. 5 is a flowchart illustrating in more detail a process when the drag trace of the drag input is matched to a predetermined specific pattern, the screen information relating to a specific application is accordingly displayed on the first region. Referring to FIG. 5, when in Step S208, the drag input is applied with the tapping tool staying in contact, the controller 180 recognizes the drag trace of the drag input (S500). In addition, the controller 180 determines whether or not the drag trace is displayed, based on the user's selection.

For example, when the user selects the displaying of the drag trace in order to check the drag trace with their eyes, the controller 180 displays the drag trace as a dotted or solid line or in the shape of a predetermined-shape graphic object on the display unit 151. However, when the user does not select this feature, the drag trace is only recognized and the inactivated state of the display unit 151 is maintained.

When the drag trace of the drag input is recognized in Step S500, the controller 180 checks whether or not a predetermined pattern matched to the drag trace is present (S502). Then, when the predetermined pattern matched to the drag trace is present, an application corresponding to the predetermined pattern is selected (S504).

In addition, the predetermined patterns are in the shape of various symbols that are selected or generated by the user. For example, the user can select a specific application and select any one among various symbols, as a pattern corresponding to the selected application, or may directly generate his/her desired symbol. Then, the selected or generated symbol is stored as a pattern corresponding to the selected application. In Step S502, the controller 180 checks whether a symbol that is similar to a predetermined degree or above to the drag trace recognized in Step S500 is present among the symbols stored in advance as the specific patterns. Then, when a symbol similar to the predetermined degree or above to the drag trace is present, an application corresponding to such a symbol is selected in Step S504.

When in Step S504, a specific application corresponding to the drag trace is selected, the controller 180 displays the screen information relating to the currently-selected application on the first region (S506). In addition, as described above, there are various types of applications. For example, the applications may include widgets relating to current weather, news, time information, and the like and applications for displaying alerting information that alerts the user to an unchecked SMS message or an unchecked event. In addition, the applications may include applications for checking information on various documents, images, and the like according to the user's selection.

In this instance, in Step S506, various pieces of screen information relating to the application are displayed on the first region. For example, when the application is a widget displaying weather, news, time information, or the like, various pieces of screen information for displaying weather information, news information, and current time information are displayed on the first region. In addition, when the application is the alerting information for displaying the unchecked message, any one among contents of the unchecked message is displayed on the first region.

In addition, as illustrated in FIG. 4, the controller 180 can maintain the activated state of the first region only while the touch input state continues. That is, as illustrated in FIG. 4, when the touch input state is terminated, the controller 180 can terminate the activated state of the first region so that the screen information relating to an application that is selected based on the drag input in Step S504 is no longer displayed.

In addition, the case assuming that one application corresponds to a specific pattern is described above, but multiple applications may correspond to the specific pattern. In this instance, the controller 180 partitions the first region into multiple regions. In Step S506, the controller 180 can display the screen information relating to each of the applications corresponding to the drag trace on each region that results from partitioning the first regions.

In addition, when the multiple applications correspond to the specific pattern, the controller 180 can distinguishes the multiple applications from one another, based on the direction in which the drag input is applied. That is, in Step S504, the controller 180 can select one among the applications corresponding to the pattern that is matched to the drag trace, based on the direction in which the drag input forming the drag trace is applied.

Furthermore, when the drag trace is matched to a specific pattern, the controller 180 can determine a region of the display unit 151, of which a size correspond to the drag trace, as the first region. In this instance, when the drag trace of the drag input is matched to a specific pattern, the controller 180 display the screen information on the application corresponding to the specific pattern on the region of the display unit 151, which corresponds to the drag trace. Therefore, the size and the shape of the first region are determined according to the drag trace. Then, even though the drag trace is matched to the same pattern, the size of the region of the display unit 151, on which the screen information on the application is displayed, is changed based on the size of the drag trace.

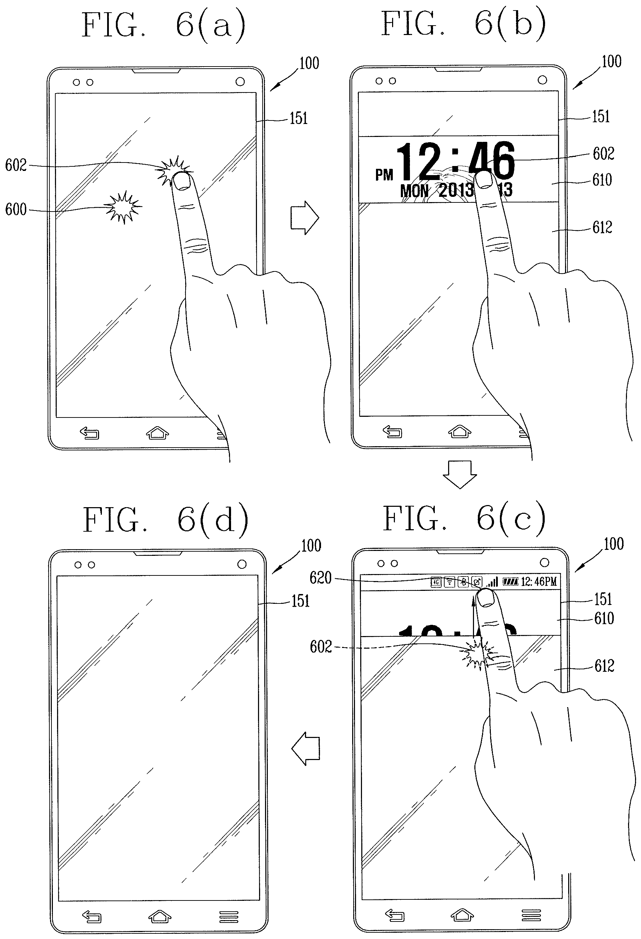

Next, FIGS. 6(a) to 6(d) illustrate an example in which the screen information is displayed based on the tapping tool staying in contact. FIGS. 6(a) to 6(d) assume a locked screen is displayed when the display unit 151 switches from the inactivated state to the activated state.

First, as illustrated in FIG. 6(a), when multiple taps 600 and 602 are applied to the main body of the mobile terminal 100, the controller 180 determines whether or not the last tap 602 stays in contact with the position to which the last tap 602 is applied (step S202 in FIG. 2). Then, when the last tap 602 stays in contact for a predetermined time or more, the controller 180 determines that the last tap 602 stays in contact and partitions the display unit 151 into the multiple regions.

FIG. 6(b) illustrates an example in which the display unit 151 is partitioned into the multiple regions in this manner. As illustrated in FIG. 6(b), the controller 180 partitions the display unit 151 into a first region 610 that is formed based on the position with which the tapping tool stays in contact, and a second region 612 other than the first region 610. Then, as illustrated in FIG. 6(b), the screen information is displayed only on the first region 610.

As described above, one portion of the screen information displayed when the display unit 151 switches from the inactivated state to the activated state is displayed on the first region 610. Further, the one portion of the screen information displayed on the first region 610 is determined based on the position with which the tapping tool stays in contact. Therefore, when the position with which the tapping tool stays in contact is adjacent to a position on the display unit 151including time information displayed on the locked screen, as illustrated in FIG. 6(b), the screen information including the time information in the locked screen is displayed on the first region 610.

Further, when the drag input is applied with the tapping tool staying in contact, as described in FIG. 4, the controller 180 changes the position of the first region 610 based on the direction in which the drag input is applied and the distance that the drag input is dragged. Accordingly, as illustrated in FIG. 6(c), when the drag input is applied to one point 620 on the display unit 151 from a point 602 with the tapping tool staying in contact, the controller 180 moves the first region 610 to a position corresponding to one point 620 on the display unit 151 and displays one portion of the locked screen corresponding to the first region 610 on the first region 610. Therefore, as illustrated in FIG. 6(c), when the position of the first region 610 is changed based on the drag input, the screen information displayed on the first region 610 is accordingly changed as well.

Therefore, based on the user's selection, the controller 180 moves the first region 610 on the locked screen, and displays the screen information displayed in an arbitrary position on the locked screen is displayed through the first region 610. Accordingly, the user can freely check the screen information displayed on the locked screen, through the first region 610.

Furthermore, as described above referring to FIG. 4, the screen information is displayed through the first region 610 only while the touch input continues. Accordingly, when the touch input is terminated, as illustrated in FIGS. 6(a) to 6(d), the controller 180 can combine the currently formed first and second regions 610 and 612 in order to switch all of the regions of the display unit 151 back to the inactivated state. Therefore, the user can check his/her desired information in an easy, fast manner, without a process of turning on and off the display unit 151.

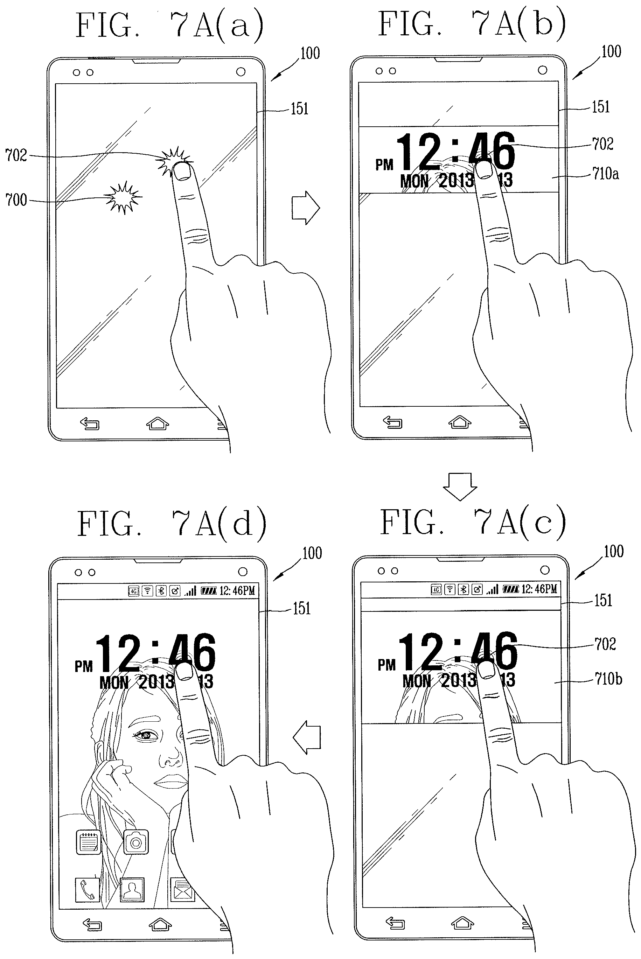

Next, FIGS. 7A-7D illustrate an example in which the screen information corresponding to the drag input being applied is displayed according to the steps described referring to FIG. 4. First, referring to FIG. 7A(a), when multiple taps 700 and 702 are applied, the controller 180 forms a first region 710a as illustrated in FIG. 7A(b), based on whether or not the tapping tool staying in contact with the position to which the last tap 702 is applied.

Then, the controller 180 changes the size of the first region 710a based on the tapping tool staying in contact. For example, the controller 180 changes the size of the first region 710a, based on the period of time for which the tapping tool stays in contact or on the amount of pressure that the tapping tool applies to the main body of the mobile terminal 100.

Therefore, when the period of time for which the tapping tool stays in contact becomes longer or the amount of pressure that the tapping tool applies becomes larger, the size of the first region 710a becomes greater like that of the first region 710b illustrated in FIG. 7A(c). Then, when the drag input is applied with the tapping tool staying in contact, the first region 710b with the large size is moved on the display unit 151 based on the drag input.

However, when the user continues to maintain the state where the tapping tool stays in contact or increases the amount of pressure that the tapping tool applies to the main body of the mobile terminal 100, the size of the first region 710b is further increased. In this instance, as illustrated in FIG. 7A(d), the size of the first region 710b is increased corresponding to all of the regions of the display unit 151.

Thus, when the size of the first region determined according to the tapping tool staying in contact corresponds to all of the regions of the display unit 151, the controller 180 switches all of the regions of the display unit 151 to the activated state. The controller 180 can also continue to maintain the activated state of the display unit 151 regardless of whether or not the tapping tool stays in contact.

Thus, as illustrated in FIGS. 7A(a) to 7A(d), the size of the first region can be increased according to the tapping tool staying in contact. However, an activated region of the display unit 151 may be gradually expanded according to a predetermined time.

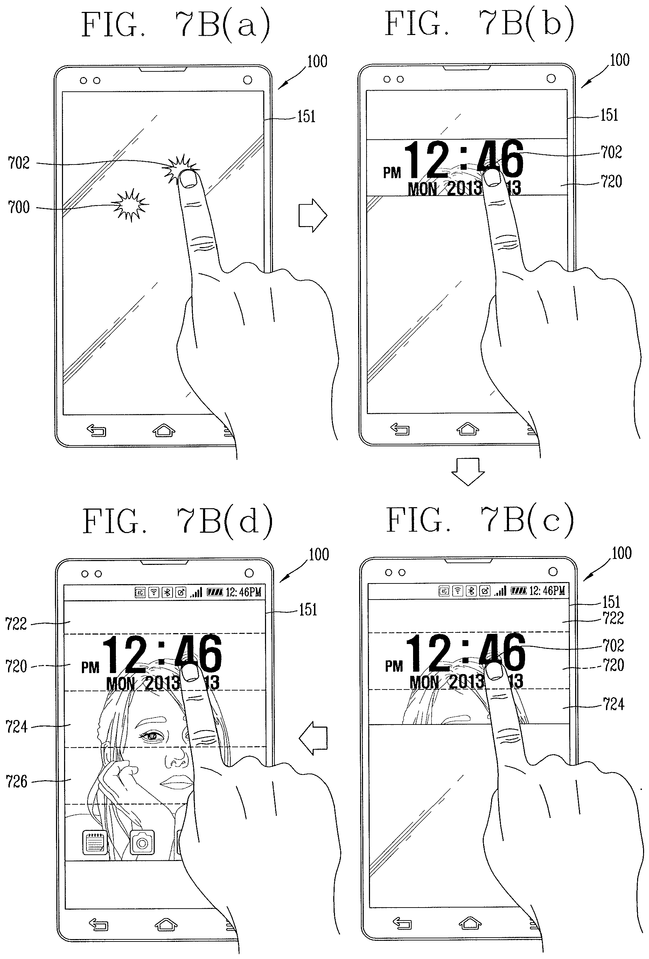

FIGS. 7B(a) to 7B(b) illustrate an example of this. For example, as illustrated in FIG. 7B(a), when the user applies multiple taps 700 and 702, and maintains for a predetermined time or more the last tap 702, the controller 180, as illustrated in FIG. 7B(b), activates one predetermined region 720 of the display unit 151 and displays the screen information through the activated region. When the user maintains the last tap 702 for a predetermined time or more, the controller 180 additionally activates an inactivated region of the display unit 151 as much as the size of the currently-activated one region 720.

For example, as illustrated in FIG. 7B(b), when the one predetermined region 720 of the display unit 151 is activated, the user maintains, once more for a predetermined time or more, the tapping tool in contact, the controller 180 additionally activates the inactivated region of the display unit 151, with the currently-activated region of the display unit 720 in between. Further, the size of the additionally-activated region of the display unit 151 corresponds to the size of the currently-activated region of the display unit 151. Therefore, the controller 180 activates the adjacent inactivated region of the display unit 151 as much as the size of the currently-activated region 720, with the currently-activated region 720 in between.

FIG. 7B(c) illustrates an example of this. In FIG. 7B(c), regions 722 and 724 of the display unit 151, which corresponds to the size of the activated region, are examples of the additionally-activated regions with the activated region 720 in between. Therefore, as illustrated in FIG. 7B(d), when the user continues to maintain the last tap 702 in contact, the activated region of display unit 151 is expanded as much as a predetermined size every predetermined time.

Further, when the user no longer maintains the state where the tapping tool stays in contact, the current-region of the display unit 151 switches back to the inactivated state. However, when the period of time for which the last tap 702 stays in contact exceeds a predetermined time, the controller 180 can switch all of the regions of the display unit 151 to the activated state.

Then, the controller 180 can continue to maintain the activated state of the display unit 151 regardless of whether or not the tapping tool stays in contact. In addition, by continuing to maintain the tapping tool in contact, the activated region of the display unit 151 is gradually increased and thus all of the regions of the display unit 151 are activated. Further, the controller 180 can continue to maintain the activated state of the display unit 151 regardless of whether or not the last tap 702 stays in contact.

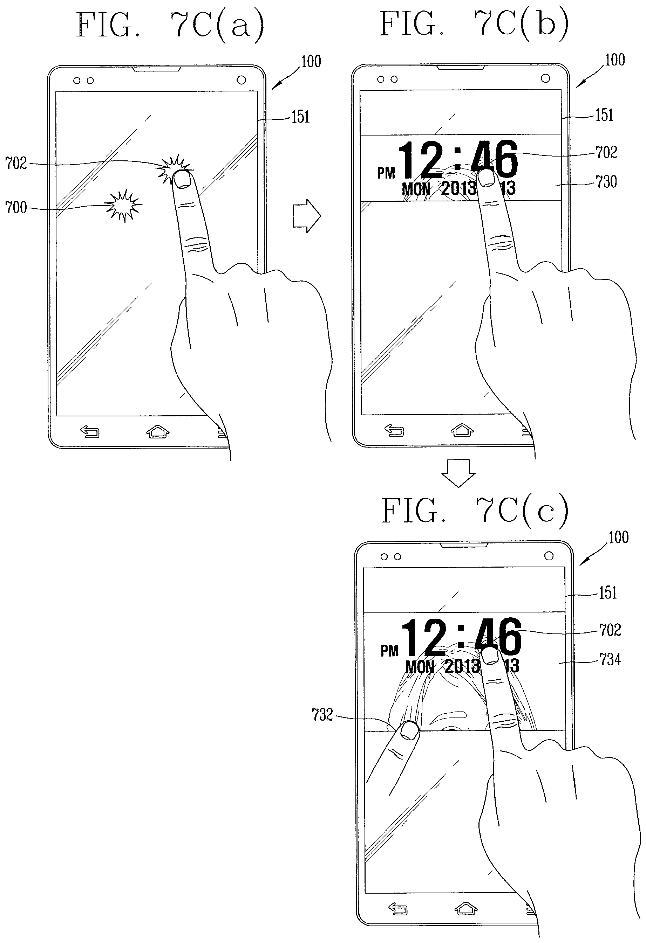

Further, the user activates at least one region of the display unit 151 using at least one tapping tool such as his/her one finger. However, the user can designate directly the region of the display unit 151 that is to be activated, using a multi-touch. For example, as illustrated in 7C(a), when the user applies multiple taps 700 and 702, and maintains for a predetermined time or more the last tap 702 in contact, the controller 180, as illustrated in FIG. 7C(b), activates one predetermined region 730 of the display unit 151.

In addition, the controller 180 detects whether or not the user applies a new touch input to the main body of the mobile terminal 100 using a different touch tool such as his/her different finger. Then, when the user applies a new touch input, the controller 180 changes the size of the currently-activated region of the display unit 151 so the size of the currently-activated region corresponds to a point at which the new touch input is detected.

For example, as illustrated in FIG. 7C(c), when a new touch input applied by the user is detected outside of the currently-activated region of the display unit 151, the controller 180 expands the currently-activated region of the display unit 151 to a size 734 corresponding to a point 732 at which the new touch input is detected. However, when the new touch input is detected inside of the currently-activated region of the display unit 151, the controller 180 reduces the currently-activated region of the display unit 151 to a size corresponding to a point at which the new touch input is detected.

Furthermore, the controller 180 can change the currently-activated region of the display unit 151 based on the state in which the new touch input is applied. For example, when the user makes a gesture such as a pinch-in or a pinch-out when the user applies the new touch input, the controller 180 changes the size of an activated region 734 of the display unit 151 based on a point to which the new touch input is dragged. In addition, the pinch-in gesture or the pinch-out gesture means a user's touch gesture in which at least two touch inputs are detected as being dragged to each other (pinch-in) or are detected as being dragged away from each other, respectively.

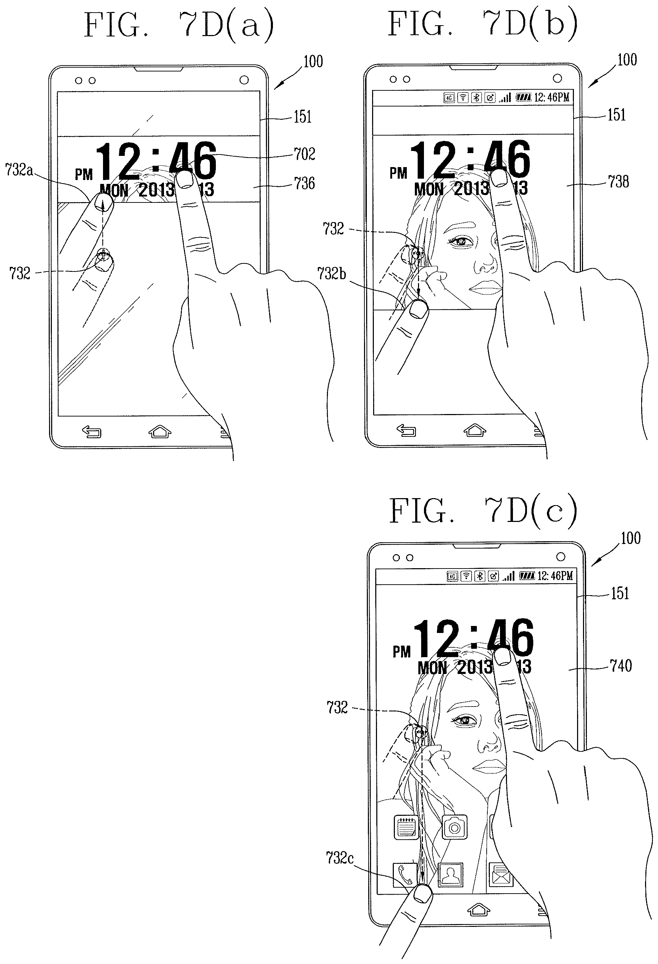

For example, as illustrated in FIG. 7D(a), when the user drags the touch input from a first point 732 to a second point 732a (when the two touch inputs 702 and 732 come close to each other (pinch-in)), the controller 180 activates a region of the display unit 151, which corresponds to the second point 732a to which the touch input is dragged. Therefore, the activated region 734 of the display unit 151, which is illustrated in FIG. 7C(c), is reduced to one like an activated region 736 of the display unit 151 in FIG. 7D(a).

In contrast, when the two touch inputs 702 and 732 are dragged away from each other (pinch-out), the controller 180 further expands the currently-activated region of the display unit 151. For example, as illustrated in FIG. 7D(b), when the user drags the touch input from the first point 732 to a third point 732b, the controller 180 activates a region of the display unit 151, which corresponds to the third point 723b to which the touch input is dragged. Therefore, the activated region 734 of the display unit 151, which is illustrated in FIG. 7C(c), is expanded to one like the activated region 738 of the display unit 151 in FIG. 7D(b).

Further, when the user's touch gesture is moved away from a predetermined region, the controller 180 can inactivate or activate all of the regions of the display unit 151. For example, when the size of the activated region of the display unit 151, which is formed based on the user's touch gesture, is less than a predetermined size, the controller 180 can inactivate all of the regions of the display unit 151. On the contrary, when the size of the activated region of the display unit 151, which is formed based on the user's touch gesture, exceeds the predetermined size, the controller 180 can activate all of the regions of the display unit 151.

FIG. 7D(c) illustrates an example of this. For example, as illustrated in FIG. 7D(c), when the user drags the touch input from the first point 732 to a point 732c outside of a predetermined region of the display unit 151, or when the size of the activated display region determined by dragging the touch input exceeds a predetermined size, the controller 180 activates all of the regions of the display unit 151. In addition, when all of the regions of the display unit 151 are activated, the controller 180 can continue to maintain the activated state of the display unit 151 regardless of whether or not the tapping tool stays in contact.

Further, the case assuming that a new touch input is applied below the activated region of the display unit 151 (for example, in a direction in which a microphone 122 is positioned in the mobile terminal 100) and the touch input is dragged by the user is described above. Accordingly, FIGS. 7C(a) to 7C(c) and 7D(a) to 7D(c) illustrate that the region below the currently-activated lower display region is expanded or reduced.

However, a new touch input may be applied above the activated region of the display unit 151 (for example, in a direction in which a sound output unit 152 is positioned in the mobile terminal 100). Then, in this instance, based on the user's drag input for the new touch input, the controller 180 can expand or reduce the region above the currently-activated region of the display unit 151.

In addition, an example is described above in which the size of the activated region of the display unit 151 is changed by applying the tap for the new touch input with the finger, but in contrast, the size of the activated region of the display unit 151 may be changed by the state in which the tap for the last touch input is applied, while the tapping tool stays in contact. For example, the user can make the pinch-in gesture or the pinch-out gesture using both his/her finger with which a tap for a new touch input is applied, and his/her finger with which the last tap for the touch input is applied and which stays in contact. Based on the gesture for the touch input, the controller 180 can change the size of the region to be activated, of the display unit 151.

Further, as described above, when the drag input is applied while the tapping tool stays in contact, the screen information relating to a specific application is displayed on the first region, corresponding to the drag input.

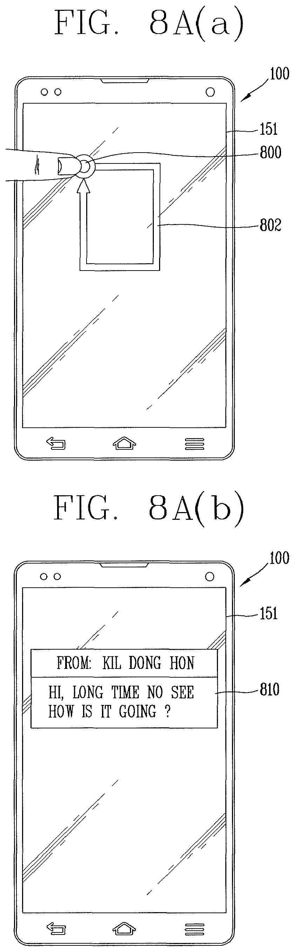

In more detail, FIGS. 8A-8D illustrates an example in which the screen information relating to a specific application corresponding to the drag input is displayed in this manner in the mobile terminal 100 according to the embodiment of the present invention.

As described in FIG. 5, when the tapping tool with which the last tap for touch input is applied stays in contact with the main body of the mobile terminal 100, and if the trace of the drag input matches a predetermined specific pattern, the specific application is selected based on the pattern to which the trace of the drag input, and the screen information relating to the selected application is displayed on the first region.

For example, as illustrated in FIG. 8A(a), when the drag input is applied starting from one point 800 on the display unit 151 with which the tapping tool stays in contact forms a rectangle-shaped trace 802, the controller 180 detects whether or not a pattern corresponding to the rectangle-shaped trace 802 is present (Step S502). Then, when pattern information matched to the rectangle-shaped trace is present, the controller 180 displays on the display unit 151 a screen associated with the execution of the application corresponding to the pattern. For example, when the application corresponding to the rectangle-shaped trace 802 is an application that displays an unchecked message, the controller 180 can display the unchecked message, corresponding to the drag input forming the rectangle-shaped trace 802 in a region 810. FIG. 8A(b) illustrates an example of this.

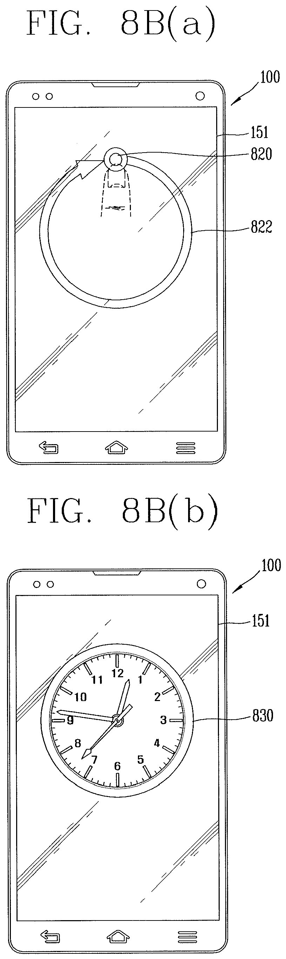

Further, the application may be determined in a way that differs according to the trace of the drag input. For example, when, as illustrated in FIG. 8B(a), the drag input applied starting from one point 802 on the display unit 151 with which the tapping tool stays in contact forms a circle-shaped trace 822, the controller 180 can search for a pattern corresponding to the circle-shaped trace 822, and display on the currently-formed first region an application corresponding to the pattern that is found as a result of the search. FIG. 8B(b) illustrates an example in which the application corresponding to the circle-shaped trace 822 is a watch application for displaying current time information in a region 830.

Further, as described above, in FIGS. 8A(a) and 8A(b), a specific application corresponding to the drag trace is displayed on the first region that is determined based on the tapping tool staying in contact. Accordingly, as described referring to FIGS. 7A(a) to 7A(d), when the size of the first region is changed based on the period of time for which the tapping tool stays in contact or on the amount of pressure that the tapping tool applies, the sizes of the regions 810 and 830 on which the application is displayed can also be changed.

Further, as described above, multiple applications corresponding to specific patterns may be installed on the mobile terminal 100 according to the embodiment of the present invention, and any one may be selected from among the multiple applications, based on the direction in which the drag input is applied.

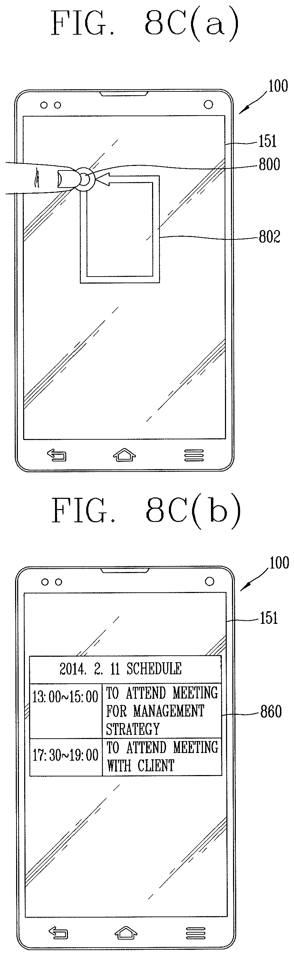

FIGS. 8C(a) and 8C(b) are an example of this. For example, one rectangle-shaped symbol is stored as pattern information corresponding to an unchecked message and a schedule management application in the memory 170 of the mobile terminal 100 according to the embodiment of the present invention. In addition, information on the direction in which the drag input is applied, which corresponds to each of the alerting application and the schedule management application, is stored in the memory 170. Further, the direction in which the drag input is applied, which corresponds to the alerting application, and the direction in which the drag input is applied, which corresponds to the schedule management application, differ from each other.

For example, when, as illustrated in FIG. 8A(a) and 8A(b), the drag input is applied rightward starting from the one point 800 on the display unit 151 with which the tapping tool stays in contact, and finally forms the rectangle-shaped 802, the controller 180 selects the alerting application, and displays the screen information relating to the execution of the alerting application on the first region as illustrated in FIG. 8A(b).

However, when the rectangle-shaped traces 802 are the same as the previous one in shape, but differ in terms of the direction in which the drag input is applied, the controller 180 selects a different application and displays the selected different application on the first region. FIGS. 8C(a) and 8C)(b) are an example of this.

For example, even though the rectangle-shaped traces 802 that are the same in shape are present, when, as illustrated in FIG. 8C(a), the drag input is applied downward starting from the one point 800 on the display unit 151 with which the tapping tool staying in contact and finally forms the rectangle-shaped trace 802, the controller 180 can select the schedule management application instead of the alerting application, and displays the screen information relating to the execution of the schedule management application on the first region.

Further, as described above, when the screen information relating to a specific application is displayed based on the trace of the drag input, the size and the shape of the first region is determined according to the trace of the drag input.

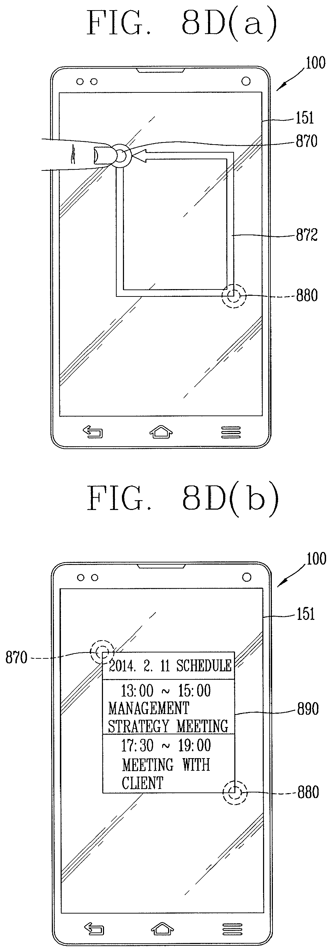

FIG. 8D(a) and 8D(b) illustrate an example of this. For example, when the drag trace is matched to a specific pattern, the controller 180 determines a region of the display unit 151, which corresponds to the drag trace, as the first region. That is, there is present a specific pattern that is matched to the trace of the drag input, the controller 180 determines the first region according to the size and the shape of the specific pattern, and displays on the first region the screen information relating to the execution of a specific application corresponding to the trace of the drag input.

First, referring to FIG. 8D(a), when the drag input is applied starting from the one point 800 on the display unit 151 with which the tapping tool stays in contact, passes through a different point 880, and finally forms a rectangle -shaped trace 872, the controller 180 selects the schedule management application, based on the rectangle-shaped trace 872 and on the direction in which the drag input is applied. Then, the controller 180 determines the size and the shape of the first region, based on the size and the shape of a specific pattern corresponding to the rectangle-shaped trace 872, and displays the screen information relating to the execution of the selected application on the determined first region.

FIG. 8D(b) illustrates an example of this. Referring to FIG. 8D(b), the controller 180 determines a first region 890, based on the rectangle-shaped trace 872 formed by the drag input applied starting from the one point 800 on the display unit 151 with which the tapping tool staying in contact and passes through the different point 872, and displays the screen information relating to the execution of the schedule management information, based on the size of the shape of the determined first region 890.

Further, as illustrated in FIG. 8B(a) and 8B(b), when the trace of the drag input is in the shape of a circle, the first region may be formed in a specific pattern corresponding to the trace 822 of the drag input, that is, in the shape of a circle. In this instance, the first region is formed in the shape of a circle corresponding to the trace 822 of the drag input, based on the size of the trace 822 of the drag input. Accordingly, only a first region 830 in the shape of a circle is activated and an application corresponding to the trace 822 of the drag input, that is, the screen information relating to the execution of the watch application is displayed.

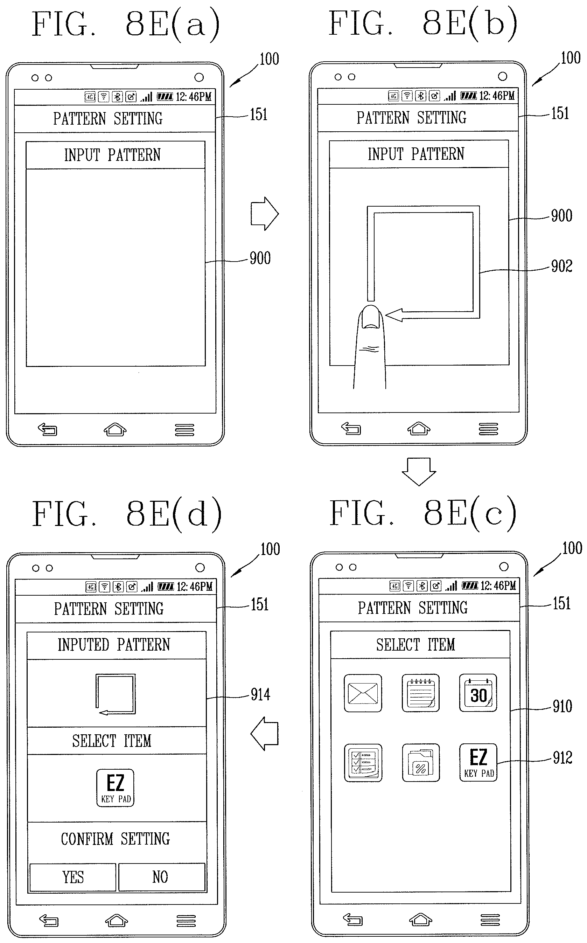

Further, the user can directly set this touch input trace and a specific application corresponding to the touch input trace. FIGS. 8E(a) to 8E(d) are an example of this. For example, referring to FIG. 8E(a), at the request of the user, the controller 180 sets a region 900 into which the user inputs a new touch input trace, that is, a specific pattern, to be in at least one region of the display unit 151, and indicates the region 900.

Then, as illustrated in FIGS. 8E(b) and 8E(c), when for later use, the user inputs a pattern 902 into the region 900 being set, the controller 180 outputs a menu screen 910 for selecting an application corresponding to the pattern 902 being input, on the display unit 151. For example, as illustrated in FIG. 8E(c), the controller 180 displays the menus screen 910 including items corresponding to the multiple applications being set, on the display unit 151.

In addition, the menu screen 910 includes various items. For example, the menu screen 910 may include items associated with a message or a social network service (SNS) application and items associated with a schedule management application such as a reminder or a to-do list. In addition, the menu screen 910 may include items associated with an application for system settings, such as memory optimization or brightness setting for the display unit 151.

In addition, the menu screen may include items associated with a user interface (UI) that is designated in advance by the user. For example, the menu screen 910 may include items associated with a specific input method editor (IME). That is, the user can generate the items associated with the specific IME in advance and then make the item included in the menu screen 910. The user can set the items associated with the specific IME to correspond to a new pattern that he/she inputs.

For example, as illustrated in FIG. 8E(c), the user can select the item associated with the specific IME, such as an EZ keypad 912 from among the items included in the menu screen 910. In this instance, as illustrated in FIG. 8E(d), the controller 180 displays a screen 914 for the pattern being input and the selected item on the display unit 151. Then, when the user finishes setting of the pattern and the selected item, the controller 180 stores the specific IME as an application corresponding to the currently-input pattern. Therefore, when the user later inputs the same touch input trace as is illustrated in FIG. 8E(b), the controller 180 determines that the user selects the EZ keypad 912. Then, the controller may display a screen associated with the EZ keypad 912, that is, a key map corresponding to the EZ keypad 912 on the display unit 151.

Further, in FIG. 8E(a) to 8E(d), only one item is described above as being selected by the user, but multiple items may be selected. For example, the user can additionally select a different item, for example, an item associated with message transmission, along with the item associated with the EZ keypad 812. In this instance, when the user inputs the same touch input trace as is illustrated in FIG. 8E(b), the controller 180 can display a screen associated with the message transmission, that is, a message writing screen, on the display unit 151, and display a screen associated with the EZ keypad 912, that is, the key map corresponding to the EZ keypad 912, on the display unit 151.

According to the embodiment of the present invention, the method described above may be realized by being stored as processor-readable codes on a program-stored medium. The computer-readable media include all types of recording devices in which to store data that is readable by a computer system. A hard disk drive (HDD), a solid state disk (SSD), a silicon disk drive (SDD), a ROM, a RAM, a CD-ROM, a magnetic tape, a floppy disk, an optical data storage device and the like are examples of the computer-readable medium, and the computer-readable medium may be realized in the form of a carrier wave (for example, transmission over the Internet). In addition, the computer may include the controller 180 of the mobile terminal.

Further, the size of the first region is described above as being determined based on the tapping tool staying in contact, but the size of the first region may be determined in a different way from this. For example, the controller 180 can determine the size of the first region, based on the touch gesture input applied from at least two or more points among points to which multiple taps are applied as soon as the multiple taps are applied by the user.

In addition, when the drag input is applied subsequently from any one among the two or more points from which the touch gesture input is applied, the first region of which the size is determined on the touch gesture input may be moved on the display unit 151, based on the subsequent drag input. Also, the touch input gestures include gestures such as the pinch-out gesture. In addition, when a predetermined touch gesture is input, all of the regions of the display region may be in an activated state (as is illustrated in FIG. 7A(d)), based on the user's selection.

Thus, the mobile terminal and corresponding method achieve the following advantages. For example, the screen information is displayed while after the mobile terminal is touched on, a touched state of the mobile terminal is maintained. This provides the advantage that the user can check his/her desired information without performing a process of turning on the display unit.

In addition, the region of the display unit on which the screen information is currently displayed is changed based on the direction in which the drag input is applied. This provides the advantage that the user can search for his/her desired information in easier manner. In addition, the screen information is displayed only while the tapping tool stays in contact. This provides the advantage that the user does not need to directly turn off the display unit.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.
The foregoing embodiments and advantages are merely and are not to be considered as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the embodiments described herein may be combined in various ways to obtain additional and/or alternative embodiments.
As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims.

## Claims

1. A mobile terminal (100) comprising:
a wireless communication unit (110) configured to provide wireless communication;
a display unit (151); and
a controller (180) configured to:
deactivate the display unit (151),
receive at least first and second taps on the deactivated display unit (151), and
activate at least one partial region of the display unit (151) and display screen information in the activated at least one partial region in response to the first and second taps,
wherein the second tap is a touch drag input,
wherein a pattern of a touch drag trace (802) of the touch drag input matches a plurality of applications, and
wherein the controller (180) is further configured to:
detect the pattern of the touch drag trace (802) of the touch drag input matching the plurality of applications,
display first screen information corresponding to a first application in the activated at least one partial region when the direction of the touch drag trace (802) is a first direction of the touch drag trace (802), and
display second screen information corresponding to a second application in the activated at least one partial region when the direction of the touch drag trace (802) is a second direction of the touch drag trace (802).

2. The mobile terminal (100) of claim 1, wherein the controller (180) is further configured to:
enlarge or reduce the activated at least one partial region including the screen information in response to the received touch drag input.

3. The mobile terminal (100) of claim 1, wherein the application corresponds to an application having an execution screen size or shape corresponding the touch drag trace (802).

4. A method of controlling a mobile terminal (100), the method comprising:
deactivating, via a controller (180) of the mobile terminal (100), a display unit (151) of the mobile terminal (100);
receiving, via the controller (180), at least first and second taps on the deactivated display unit (151); and
activating, via the controller (180), at least one partial region of the display unit (151) and display screen information in the activated at least one partial region in response to the first and second taps,
wherein the second tap is a touch drag input,
wherein a pattern of a touch drag trace (802) of the touch drag input matches a plurality of applications, and
wherein the method further comprises:
detecting the pattern of the touch drag trace (802) of the touch drag input matching the plurality of applications,
displaying first screen information corresponding to a first application in the activated at least one partial region when the direction of the touch drag trace (802) is a first direction of the touch drag trace (802), and
displaying second screen information corresponding to a second application in the activated at least one partial region when the direction of the touch drag trace (802) is a second direction of the touch drag trace (802).

5. The method of claim 4, further comprising:
enlarging or reducing the activated at least one partial region including the screen information in response to the received touch drag input.

## Patentansprüche

1. Mobiles Endgerät (100), mit:
einer Drahtloskommunikationseinheit (110), die zum Bereitstellen von Drahtloskommunikation konfiguriert ist,
einer Anzeigeeinheit (151), und
einer Steuereinheit (180), die konfiguriert ist zum:
Deaktivieren der Anzeigeeinheit (151),
Empfangen zumindest erster und zweiter Klopfberührungen auf der deaktivierten Anzeigeeinheit (151), und
Aktivieren zumindest eines Teilbereichs der Anzeigeeinheit (151) und Anzeigen von Bildschirminformation in dem aktivierten zumindest einen Teilbereich in Reaktion auf die ersten und zweiten Klopfberührungen,
wobei die zweite Klopfberührung eine Berühr- und Zieheingabe ist,
wobei ein Muster einer Berühr- und Ziehspur (802) der Berühr- und Zieheingabe zu einer Mehrzahl von Anwendungen passt, und
wobei die Steuereinheit (180) ferner konfiguriert ist zum:
Detektieren, dass das Muster der Berühr- und Ziehspur (802) der Berühr- und Zieheingabe zu der Mehrzahl von Anwendungen passt,
Anzeigen einer ersten Anwendung zugehöriger erster Bildschirminformation in dem aktivierten zumindest einen Teilbereich, wenn die Richtung der Berühr- und Ziehspur (802) eine erste Richtung der Berühr- und Ziehspur (802) ist, und
Anzeigen einer zweiten Anwendung zugehöriger zweiter Bildschirminformation in dem aktivierten zumindest einen Teilbereich, wenn die Richtung der Berühr- und Ziehspur (802) eine zweite Richtung der Berühr- und Ziehspur (802) ist.

2. Mobiles Endgerät (100) nach Anspruch 1, bei dem die Steuereinheit (180) ferner konfiguriert ist zum:
Vergrößern oder Verkleinern des aktivierten zumindest einen Teilbereichs mit der Bildschirminformation in Reaktion auf die empfangene Berühr- und Zieheingabe.

3. Mobiles Endgerät (100) nach Anspruch 1, bei dem die Anwendung einer Anwendung entspricht, welche eine Ausführungsbildschirmgröße oder -form entsprechend der Berühr- und Ziehspur (802) hat.

4. Verfahren zum Steuern eines mobilen Endgeräts (100), wobei das Verfahren umfasst:
Deaktivieren einer Anzeigeeinheit (151) des mobilen Endgeräts (100) mittels einer Steuereinheit (180) des mobilen Endgeräts (100),
Empfangen, mittels der Steuereinheit (180), zumindest erster und zweiter Klopfberührungen auf der deaktivierten Anzeigeeinheit (151), und
Aktivieren, mittels der Steuereinheit (108), zumindest eines Teilbereichs der Anzeigeeinheit (151) und Anzeigen von Bildschirminformation in dem aktivierten zumindest einen Teilbereich in Reaktion auf die ersten und zweiten Klopfberührungen,
wobei die zweite Klopfberührung eine Berühr- und Zieheingabe ist,
wobei ein Muster einer Berühr- und Ziehspur (802) der Berühr- und Zieheingabe zu einer Mehrzahl von Anwendungen passt, und
wobei das Verfahren ferner umfasst:
Detektieren, dass das Muster der Berühr- und Ziehspur (802) der Berühr- und Zieheingabe zu der Mehrzahl von Anwendungen passt,
Anzeigen einer ersten Anwendung zugehöriger erster Bildschirminformation in dem aktivierten zumindest einen Teilbereich, wenn die Richtung der Berühr- und Ziehspur (802) eine erste Richtung der Berühr- und Ziehspur (802) ist, und
Anzeigen einer zweiten Anwendung zugehöriger zweiter Bildschirminformation in dem aktivierten zumindest einen Teilbereich, wenn die Richtung der Berühr- und Ziehspur (802) eine zweite Richtung der Berühr- und Ziehspur (802) ist.

5. Verfahren nach Anspruch 4, ferner umfassend:
Vergrößern oder Verkleinern des aktivierten zumindest einen Teilbereichs mit der Bildschirminformation in Reaktion auf die empfangene Berühr- und Zieheingabe.

## Revendications

1. Terminal mobile (100) comprenant:
une unité de communication sans fil (110) configurée pour fournir une communication sans fil;
une unité d'affichage (151); et
un contrôleur (180) configuré pour:
désactiver l'unité d'affichage (151),
recevoir au moins des premier et deuxième touchers sur l'unité d'affichage désactivée (151); et
activer au moins une région partielle de l'unité d'affichage (151) et afficher des informations d'écran dans la au moins une région partielle activée en réponse aux premier et deuxième touchers,
dans lequel le deuxième toucher est une entrée tactile par glissement,
dans lequel un motif d'une trace de glissement tactile (802) de l'entrée tactile par glissement correspond à une pluralité d'applications, et
dans lequel le contrôleur (180) est en outre configuré pour:
détecter le motif de la trace de glissement tactile (802) de l'entrée tactile par glissement correspondant à la pluralité d'applications,
afficher des premières informations d'écran correspondant à une première application dans la au moins une région partielle activée lorsque la direction de la trace de glissement tactile (802) est une première direction de la trace de glissement tactile (802), et
afficher des deuxièmes informations d'écran correspondant à une deuxième application dans la au moins une région partielle activée lorsque la direction de la trace de glissement tactile (802) est une deuxième direction de la trace de glissement tactile (802).

2. Terminal mobile (100) selon la revendication 1, dans lequel le contrôleur (180) est en outre configuré pour:
agrandir ou réduire la au moins une région partielle activée incluant les informations d'écran en réponse à l'entrée tactile par glissement reçue.

3. Terminal mobile (100) selon la revendication 1, dans lequel l'application correspond à une application présentant une taille d'écran d'exécution ou une forme correspondant à la trace de glissement tactile (802).

4. Procédé de commande d'un terminal mobile (100), le procédé comprenant les étapes consistant à:
désactiver, via un contrôleur (180) du terminal mobile (100), une unité d'affichage (151) du terminal mobile (100);
recevoir, via le contrôleur (180), au moins des premier et deuxième touchers sur l'unité d'affichage désactivée (151); et
activer, via le contrôleur (180), au moins une région partielle de l'unité d'affichage (151) et afficher des informations d'écran dans la au moins une région partielle activée en réponse aux premier et deuxième touchers,
dans lequel le deuxième toucher est une entrée tactile par glissement,
dans lequel un motif d'une trace de glissement tactile (802) de l'entrée tactile par glissement correspond à une pluralité d'applications, et
dans lequel le procédé comprend en outre les étapes consistant à:
détecter le motif de la trace de glissement tactile (802) de l'entrée tactile par glissement correspondant à la pluralité d'applications,
afficher des premières informations d'écran correspondant à une première application dans la au moins une région partielle activée lorsque la direction de la trace de glissement tactile (802) est une première direction de la trace de glissement tactile (802), et
afficher des deuxièmes informations d'écran correspondant à une deuxième application dans la au moins une région partielle activée lorsque la direction de la trace de glissement tactile (802) est une deuxième direction de la trace de glissement tactile (802).

5. Procédé selon la revendication 4, comprenant en outre les étapes consistant à:
agrandir ou réduire la au moins une région partielle activée incluant les informations d'écran en réponse à l'entrée tactile par glissement reçue.
